# EUROPEAN PATENT APPLICATION

(11) **EP 1 762 309 A2**
(43) Date of publication of application: **14.03.2007**
(21) Application number: 06253413.6
(22) Date of filing: 29.06.2006
(51) Int. Cl.: B09B 3/00

(54) **Improvements in and relating to waste processing**

(30) Priority: 01.07.2005 GB 0513510; 21.02.2006 GB 0603366
(71) Applicant: Future Industrial Services Limited, Leigh WN7 4TN (GB)
(72) Inventor: Collier, Andrew James Harvey, Bolton Lancashire, BL1 5HP (GB); Casey, Daniel, Bolton Lancashire BL3 4LY (GB); Jones, Andrew Duncan, Liverpool Merseyside L36 5UE (GB)
(74) Representative: Johnson, Graham Pierssene

(57) **Abstract**

There are provided methods of treating waste ash, the method comprising the steps of combining waste ash with water to form a waste ash slurry comprising water in an amount of at least 50% by weight; treating the waste ash slurry and/or the waste ash and/or water to be combined with the waste ash to lower the pH thereof; and dewatering the waste ash slurry such that the resultant ash product comprises water in a lower amount than said waste ash slurry. Also provided are apparatus for use in the methods, methods for manufacturing cement and cement materials.

## Description

The present invention relates to waste processing and in particular to the processing of waste ash.

Large quantities of waste are produced each year and a known means for dealing with domestic and burnable trade waste is incineration. The incineration of such waste results in a residue product described as air pollution control (APC) residue (also referred to as "fly ash").

In a known process burnable domestic and/or trade and/or clinical waste is fed into a municipal incinerator and burnt. Hot combustion gases travel through the incinerator and pass over boiler and economiser tubes. Heat is transferred to water in the boiler and economiser tubes and the combustion gases are cooled. Following this the acidic gases are mixed with hydrated lime and powder activated carbon (PAC). The gases then pass to a gas cleaning system. Dust from the gas stream collects on filter bags or electrostatic precipitators. The collected dust, which is the APC residue, is then removed to silos or bags where it is stored before removal from the incinerator site as waste.

The precise nature of the APC residue depends upon the waste incinerated but it is generally found to contain calcium hydroxide and/or calcium oxide in an amount of above 10% by weight. At such levels these materials are irritants and accordingly the handling and disposal of such APC residue is a matter which must be treated with care.

A known method of disposal of APC residue is by landfill via "consolidation" processes. Such processes involve dampening the dusty ash with water and/or waste liquids to produce a consolidated mass of waste for landfill. The consolidated mass is generally classed as hazardous but may sometimes be non-hazardous. The level of water added in this process to form the consolidated mass is generally around. 20% by weight of the weight of the consolidated mass.

However, landfill may not be a desirable manner to dispose of such APC residues, even when consolidated. One known problem is that this waste comprises leachable components, such as leachable chlorides and sulphates. It would be preferable to provide means by which this waste may be recycled.

Accordingly, the present invention aims to address at least one disadvantage associated with the prior art whether discussed herein or otherwise.

According to a first aspect of the present invention there is provided a method of treating waste ash, the method comprising the steps of:
(1) combining waste ash with water to form a waste ash slurry comprising water in an amount of at least 50% by weight;
(2) treating the waste ash slurry and/or the waste ash and/or water to be combined with the waste ash to lower the pH thereof; and
(3) dewatering the waste ash slurry such that the resultant ash product comprises water in a lower amount than said waste ash slurry.

As used herein the term "waste ash" encompasses air pollution control (APC) residues which may also be referred to as fly ash or flue gas treatment residues. The "waste ash" may comprise residue produced by incinerating domestic and/or trade and/or clinical waste.

Suitably, the waste ash comprises carbon present due to activated carbon being combined with gases from an incineration process. Suitably, the waste ash comprises activated carbon.

Suitably, step (2), comprises the step of lowering the pH of the waste ash slurry. The method may thus comprise adding acid to the waste ash slurry after formation in step (1) rather than to the waste ash or to the water prior to combination in step (1).

Suitably, steps (1). (2) and (3) are performed sequentially.

Suitably the method further comprises the step (2A) of adding treatment chemicals to the waste ash slurry and/or to the waste ash and/or to the water to be combined therewith to convert one or more toxic metals, or salts thereof, present in the waste ash to a water insoluble salt.

Suitably, step (2A) comprises adding treatment chemicals to the waste ash slurry. Treatment chemicals may thus be added to the waste ash slurry subsequent to formation in step (1) rather than to the waste ash or to the water prior to combination in step (1). Suitably, step (2A) is performed after step (2). The treatment chemicals may thus be added to a waste ash slurry which has had its pH lowered.

Suitably, the steps are performed in the order: (1), (2), (2A), (3).

The method may comprise the further step (1A) of washing waste ash. Suitably, step (1A) comprises the step (i) of combining waste ash with water to form a waste ash slurry. Suitably, step (1A) comprises the step (ii) of dewatering the waste ash slurry of step (i) to produce a waste ash slurry of lower water content. Suitably, the water removed in step (ii) comprises a solution including water soluble salts from the waste ash.

Suitably, step (1A(i)) comprises combining waste ash with water to form a waste ash slurry comprising water in an amount of at least 50% by weight, preferably at leas 65% by weight, for example at least 80% by weight.

Suitably, step (1A(ii)) comprises dewatering the waste ash slurry of step (1A(i)) such that the dewatered waste ash slurry comprises water in a lower amount than said waste ash slurry of step (1A(i)). Suitably, the dewatered waste ash slurry of step (1A(ii)) comprises water soluble salts in a lower amount than the waste ash slurry of step (1A(i)).

Suitably, steps ((1A(i)) and step (1A(ii)) are performed prior to step (1). Step (1) may thus comprise combining waste ash and water by adding further water to a waste ash slurry such that the water content is increased to an amount of at least 50% by weight.

Performing step (1A) may beneficially minimise buffering effects from soluble salts in step (2) and may thus improve efficiency and/or minimise the volume of acid required in step (2).

Step (1A) may be repeated one or more times to further wash the waste ash prior to subsequent processing operations.

Suitably, the steps are performed in the order: (1A(i)), (1A(ii)), (1), (2), (2A), (3).

Alternatively, step (1A(i)) and step (1A(ii)) may be omitted or may be performed at another point in time, for example subsequent to step (2) and/or step (2A).

The method may comprise separating a carbon component from the waste ash. Suitably the method comprises the step (1B) of separating a carbon component from the waste ash. Suitably, the carbon component comprises activated carbon. Suitably, step (1B) is performed on a waste ash slurry. Suitably, the method comprises the step (1B) of separating organic molecules including dioxins and/or furans from the waste ash.

Step (1B) may be performed between steps (1) and (3), suitably between steps (1) and (2).

Alternatively, or in addition, step (1B) may be performed as part of step (1A). Suitably, step (1B) is performed between steps (1A(i)) and steps (1A(ii)) or concurrently with step (1A(ii)).

Suitably, organic components, suitably dioxins and/or furans are removed with the carbon component. Accordingly, step 1(B) may comprise the removal of dioxins and/or furans.

Suitably, the method comprises forming a waste ash slurry such that dioxins and/or furans concentrate in the carbon component of the slurry. Suitably, dioxins and/or furans partition towards and/or bond to activated carbon within the waste ash slurry. Suitably, if the carbon component is removed from the remainder of the waste ash slurry, suitably before a neutralisation step, the majority of organics, including dioxins and/or furans may be removed from the end product.

Suitably, step (1B) utilises the relative density and/or particle size of the carbon component and the remainder of the waste ash slurry to separate at least a part of the carbon component off from the slurry.

Suitably, a carbon component may be removed by centrifugation. Alternatively a carbon component may be Removed by a flotation method with the carbon floating to the surface and being removed, for example by a skimming process.

Suitably, step (1B) is performed concurrently with step (1A(ii)), most suitably these steps are one and the same. Suitably, step (1A(ii)) comprises separating a carbon component and/or organic component, for example dioxins and/or furans, from the waste ash.

Suitably dewatering step (1A(ii)) and thus step (1B) is performed with a centrifuge. Suitably, by optimising the flow into the system along with the flow of the centrate out of the system the lighter carbon particles may be carried out of the system as suspended solids in the centrate. Suitably, the heavier inorganic partition, suitably containing substantially all the hydrated lime, may concentrate in the solid phase of the centrifuge and be eliminated as solids. Suitably, said solids are then reslurried and suitably neutralised.

Suitably, the centrate stream will undergo further treatment to precipitate the solids from the centrate. This may be performed by standard effluent plant processes. For example: increasing pH to insolubilise metals; settling; clarifying the water phase away and dewatering the solids phase.

The performance of step (1B) may have a number of advantages including the removal of organics that may otherwise remain in the end (ash) product.

Suitably, the use of a two stage wash system, i.e. performing step (1A) as well as steps (1) and (2), may have benefits. Suitably, in the first stage (step (1A) as well as initially removing soluble inorganic salts, such as chlorides and/or alkyl metal salts, the first stage slurrying and dewatering may convert free lime in the form of CaO and/or or CaClOH to hydrated lime by reaction with water. The hydrated lime may react during the neutralisation step (step (2)) of the second stage to form calcium sulphate dehydrate (gypsum).

Suitably, the ash product produced by the method comprises an additive for use in cement manufacture. The method may comprise a method of manufacturing synthetic gypsum.

Suitably, the ash product of step (3) comprises synthetic gypsum which may be suitable for use in cement manufacture. Suitably, the method involves a processing step, suitably step (1B), which reduces the dioxin and/or furan level in the ash product by at least 60%, for example by around 90%. The synthetic gypsum may be substantially free of dioxins and/or furans.

Suitably, the waste ash is produced by treating combustion gases created during the incineration of waste. Suitably, said treatment comprises combining the combustion gases with hydrated lime and/or powder activated carbon (PAC)

The waste ash suitably comprises air pollution control (APC) residue. Preferably, the waste ash consists of APC residue. Suitably, the waste ash, suitably APC residue, comprises calcium hydroxide in an amount of 5% or more, for example 10% or more.

Suitably, the waste ash, suitably APC residue, comprises carbon component, suitably activated carbon, in an amount of between 1 and 1.0%, for example around 5%.

The waste ash, suitably APC residue, may comprise dioxins in an amount of 200 to 1000 ng/kg TEQ.

Suitably, the slurry produced in step (1A(i)) comprises water in an amount of between 50% and 98% by weight, preferably between 60% and 95% by weight, more preferably between 65% and 95% by weight, more preferably between 80% and 95% by weight, for example around 85% by weight.

Suitably, the slurry produced in step (1A(i)) comprises water in an amount of at least 55% by weight, for example at least: 60%; 65%; 70%; 75%; 80%; 85%; 90%; or 95% by weight.

Suitably, the slurry produced in step (1A(i)) comprises water in an amount of no more than 98% by weight, for example no more than: 97%; 96%; or 95% by weight.

Suitably, step (1A(i)) comprises combining water with the waste ash to dissolve soluble salts, suitably chloride and/or carbonate salts, present in the waste ash. Suitably, said chloride and/or carbonate salts comprises salts of a group 2 metal. Suitably, said chloride and/or carbonate salts comprise calcium salts.

Suitably, metal sulphates present in the waste ash are substantially not dissolved in step (1A(i)).

The water used in step (1A(i)) may comprise substantially pure water, for example mains water or river water. Alternatively, or in addition the water used in step (1A(i)) may comprise waste water, for example from an industrial process.

Suitably, step (1A(i)) comprises combining water and waste ash by introducing them to a combining vessel or mixing system. They may for example be introduced simultaneously.

Suitably, step (1A(i)) comprises mixing the water and waste ash, for example by stirring and/or air agitation.

Suitably, in step (1A(ii)) the waste ash slurry of step (1A(i)) is dewatered by filtering. The waste ash slurry may be dewatered by being passed through a filter press, for example a plate and frame filter press.

Suitably, the dewatered waste ash slurry of step (1A(ii)) comprises water in an amount of between 15% and 90% by weight. Suitably, the dewatered waste ash slurry of step (1A(ii)) comprises water in an amount of no more than 85% by weight, for example in an amount of no more than 80%; 75%; 60%; 65%; 60%; 55%; 50%; 45%; 40%; 35%; 30%; 25% or 20% by weight.

Suitably, the dewatered waste ash slurry of step (1A(ii)) comprises at least 5% by weight less water than the waste ash slurry of step (1A(i)). The dewatered waste ash slurry may for example comprise at least 10%; 15%; 20%; 25%; 30%; 35%; 40%; 45%; 50%; 55% or 60% by weight less water than the waste ash slurry.

Suitably, dewatering of the waste ash slurry in step (1A(ii)) removes soluble salts together with the water. Said salts may comprise soluble cations and/or anions. Said soluble salts suitably comprise soluble chloride and/or carbonate salts formerly present in the waste ash. Suitably, said salts, for example chloride and/or carbonate salts, comprise salts of a group 2 metal.

Suitably, said chloride and/or carbonate salts comprise calcium salts. Said salts may comprise salts of a group 1 metal, for example sodium or potassium.

By forming a slurry having a water:waste ash ratio of 2:1 or greater, suitably 5:1 or greater, for example abound 10:1 and then dewatering, a considerable proportion of water soluble inorganic salts may be removed from the waste ash. Suitably, at least 20%, for example at least 50%, of said salts are removed. The removal may be as high as 80% with a 5:1 water:waste ash ratio and may for example be as high as 95% with a 10:1 ratio.

Suitably, two components are produced in step (1A(ii)): a dewatered ash slurry and a water component.

Suitably, the water component of step (1A(ii)) comprises soluble salts formerly present in the waste ash. The water component may thus comprise a "brine solution".

Suitably the water component comprises around 20 to 95% of the water soluble salts formerly present in the waste ash.

Suitably, the water component of step (1A(ii)) comprises metal sulphates and/or hydroxides at a level of 10ppm or less.

The water component of step (1A(ii)) may be suitable for discharge to a sewer. Alternatively, the water component of step (1A(ii)) may be subjected to further treatment and/or combined with other effluent streams to render it suitable for discharge. Following step (1A(ii)) the method may thus comprise discharging the water component, either immediately or after further processing.

Suitably, the slurry produced in step (1) comprises water in an amount of between 50% and 98% by weight, preferably between 60% and 95% by weight, more preferably between 65% and 95% by weight, more preferably between 80% and 95% by weight, for example around 85% by weight.

Suitably, the slurry produced in step (1) comprises water in an amount of at least 55% by weight, for example at least: 60%; 65%; 70%; 75%; 80%; 85%; 90%; or 95% by weight.

Suitably, the slurry produced in step (1) comprises water in an amount of no more than 98% by weight, for example no more than: 97%; 96%; or 95% by weight.

Suitably, step (1) comprises combining water with the waste ash to dissolve soluble salts, suitably chloride and/or carbonate salts, present in the waste ash. Suitably, said chloride and/or carbonate salts comprises salts of a group 2 metal. Suitably, said chloride and/or carbonate salts comprise calcium salts.

Suitably, metal sulphates and/or hydroxides present in the waste ash are substantially not dissolved in step (1).

The water used in step (1) may comprise substantially pure water, for example mains water or river water. Alternatively, or in addition the water used in step (1) may comprise waste water, for example from an industrial process.

Step (1) may comprise combining water and waste ash by simultaneously introducing them to a combining vessel or mixing system.

Alternatively, step (1) may comprise combining water and waste ash by adding further water to a waste ash slurry produced in step (1A).

Suitably, step (1) comprises mixing water and waste ash, for example by stirring and/or air agitation.

Suitably, step (2) comprises adding acid, preferably hydrochloric acid and/or sulphuric acid. Suitably, step (2) comprises adding acid to a waste ash slurry, suitably to a waste ash slurry after formation in step (1). The acid may comprise hydrochloric acid or sulphuric acid having a concentration of from around 5% to 95% in a suitable quantity to adjust the pH within the desired range.

Suitably, hydrochloric acid is used if the product of step (3) is to go to landfill. Suitably, sulphuric acid is used if the product of step (3) is to go for use in the cement industry.

Suitably, step (2) comprises adding acid such that the pH of the waste ash slurry is caused to lie in the range of pH4-12, preferably pH4-11, as measured at ambient temperature. Suitably, step (2) comprises adding acid to the waste ash slurry formed in step (1) to adjust the pH to lie in the range of pH4-8.

Suitably, in step (2) the pH of the waste ash slurry is adjusted to lie in the range of pH4.0-11.0, preferably in the range of pH4.0-8.0, for example around pH6.0.

Suitably, in step (2) the pH of the waste ash slurry is adjusted to be less than pH11.0, for example less than 11.5; 10.0; 9.5; 9.0; 8.5; 8.0; 7.5; 7.0; 6.5; 6.0; 5.5; 5.0 or 4.5.

Suitably, in step (2) the PH of the waste ash slurry is adjusted to be at least 4.0, for example at least 4.5; 5.0; 5.5; 6.0; 6.5; 7.0; or 7.5.

Suitably, step (2A) comprises adding a treatment agent to precipitate one or more metals, for example lead. Suitably, the treatment agent comprises a sulphide and/or polysulphide. The treatment agent preferably comprises a sulphide of a group 1 metal. The treatment agent may suitably comprise sodium sulphide. , The treatment agent may essentially consist of a sulphide.

Suitably, the treatment agent is added in step (2A) in an amount of between 0.001% and 5.0% by weight of the waste ash from which the waste ash slurry is formed in step (1). Suitably, the treatment agent is added in an amount of between 0.1% and 2.0% by weight, for example around 1.0% by weight.

Suitably a sulphide is added in step (2A) in an amount of between 0.001% and 5.0% by weight of the waste ash from which the waste ash slurry is formed in step (1). Suitably, the sulphide is added in an amount of between 0.1% and 2.0% by weight, for example around 1.0% by weight.

Suitably, toxic metals, such as lead and/or zinc, are present in the waste ash slurry after step (2A) as insoluble hydroxides and/or sulphides.

Suitably, in step (3) the waste ash slurry is dewatered by a mechanical dewatering means, for example by a plate and frame filter press and/or a centrifuge.

The ash product of step (3) may suitably comprise treated waste ash and water.

Suitably, the ash product of step (3) comprises water in an amount of no more than 70% by weight, for example in an amount of no more than 65%; 60%; 55%; 50%; 45%; 40%; 35%; 30%; 25%; 20%; 15%; or 10% by weight. The ash product of step (3) may suitably comprise water in an amount of between 5% and 65% by weight, for example around 40% by weight. Suitably, the ash product of step (3) comprises a filter cake. The ash product may be substantially solid.

Suitably, the ash product comprises at least 5% by weight less water than the waste ash slurry. The ash product may for example comprise at least 10%; 15%; 20%; 25%; 30%; 35%; 40%; 45%; 50%; 55%; 60%; 65%; 70%; 75%; 80%; 85%; or 90% by weight less water than the waste ash slurry. Suitably, the ash product comprises between 35% and 95% by weight less water than the waste ash slurry, for example around 60% by weight less.

Suitably, dewatering of the waste ash slurry in step (3) removes soluble salts together with the water. Said soluble salts suitably comprise soluble chloride and/or carbonate salts formerly present in the waste ash. Suitably, said chloride and/or carbonate salts comprises salts of a group 2 metal. Suitably, said chloride and/or carbonate salts comprise calcium salts.

Suitably, two products are produced in step (3): an ash product and a water product.

Suitably, the dewatering step (step (3)) comprises separating the slurry into a substantially solid phase and a liquid phase.

Suitably, step (3) comprises separating insoluble salts and inert compounds from soluble salts and water.

Suitably, the water product of step (3) comprises between 5% and 95% of the water formerly present in the waste ash slurry. The water product of step (3) may comprise between 20% and 90% of the water formerly present in the waste ash slurry, for example around 60%.

Suitably, the water product of step (3) comprises soluble salts formerly present in the waste ash. The water product may thus comprise a "brine solution".

Suitably, the water product of step (3) comprises soluble chloride and/or carbonate salts formerly present in the waste ash. Suitably, said chloride and/or carbonate salts comprises salts of a group 2 metal. Suitably, said chloride and/or carbonate salts comprise calcium salts.

The water product may comprise 20% or more, for example 50% or more of the soluble salts formerly present in the waste ash.

Suitably, the water product of step (3) is substantially free of metal sulphides and/or hydroxides.

Suitably, the water product of step (3) is suitable for discharge to a sewer. Following step (3) the method may thus comprise discharging the water product. Alternatively, or in addition, depending on the level of salts in the water product it may be recycled for use in step (1) of a subsequent like process.

Suitably, the ash product of step (3) is suitable for disposal as landfill waste. Following step (3) the method may thus comprise disposing of the ash product by landfill. As a consequence of soluble salts being removed from the waste ash during the method of the first aspect a lower mass of ash product for disposal may be created than would otherwise be the case. The ash product may be suitable for disposal as non-hazardous landfill waste rather than as hazardous landfill waste.

Alternatively, or in addition if the product of step (3) is high in sulphate and/or other materials suitable for cement manufacture it may be used as alternative raw material in cement production. Following step (3) the method may thus comprise using the ash product for cement production.

According to a second aspect of the present invention there is provided an apparatus for use in the method according to the first aspect, said apparatus comprising: a waste ash silo; a water supply; a combining vessel; and a dewatering station.

Suitably, the apparatus further comprises an acid supply and suitably a treatment chemical supply.

The combining vessel may suitably comprise a mixing vessel and may comprise a stirrer.

The dewatering station may suitably comprise a filter and may comprise a frame filter press.

According to a third aspect of the present invention there is provided a method of manufacturing cement, the method comprising:
(a) incinerating waste and combining the combustion gases with activated carbon and hydrated lime to produce waste ash;
(b) treating the waste ash according to the method of the first aspect; and
(c) using the ash product from step (b) as synthetic gypsum in the manufacture of cement.

Suitably, the method may comprise any feature as described in relation to the first aspect except where such features are mutually exclusive.

According to a fourth aspect of the present invention there is provided a cement material comprising an ash product produced by the method of the first aspect.

The present inventors have recognised a previously un acknowledged problem relating to the composition of waste and the suitability of waste ash products for cement manufacture. Surprisingly they have found that by performing the method of the first aspect, and suitably in particular by removing a carbon component and dioxins and/or furans, an ash product suitable for incorporation in cement may be provided.

The present invention will now be illustrated by way of example with reference to the accompanying drawings in which:
Figure 1 is a flow diagram illustrating the stages of a treatment process;
Figures 2A-2C are views of an apparatus suitable for treating waste ash;
Figure 3 is a flow diagram illustrating the stages of an alternative treatment process; and
Figure 4 is a flow diagram illustrating the stages of an alternative treatment process.

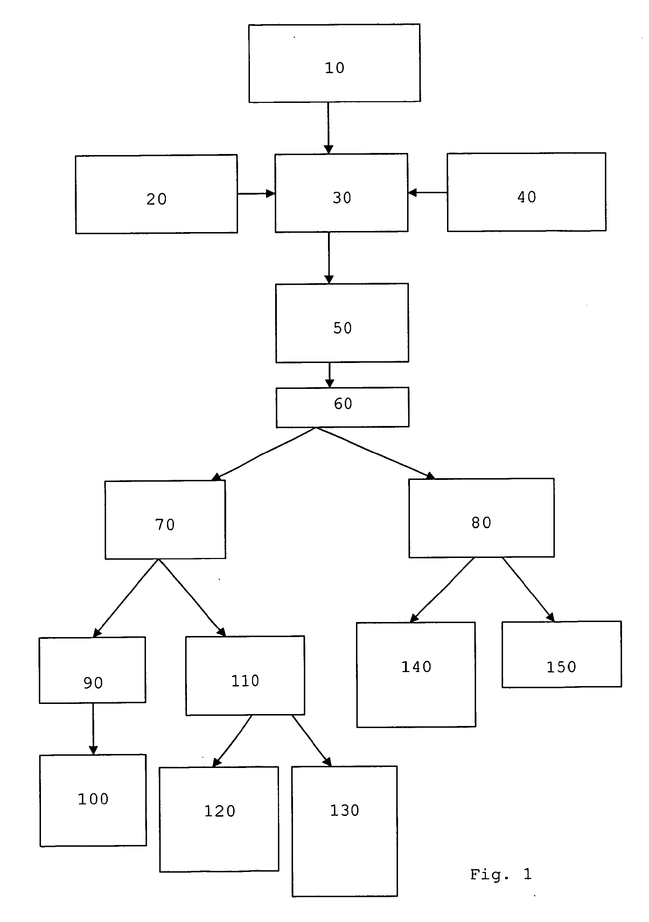

Figure 1 is a flow diagram representing the stages of a waste ash treatment process.

The waste ash to be treated in this process may be produced by incinerating municipal waste and may thus vary in composition. Suitably it will comprise APC residue and may thus be high in lime introduced during a gas cleaning process.

According to the process waste ash 10 is produced by the incineration of municipal waste (comprising one or more of domestic, trade and clinical waste). The waste ash 10 is combined with water (or waste water) 20 in a combining vessel (step (1)) in a ratio of water:ash of at least 2:1. the water and ash combination is mixed and acid or waste acid 40, either HCl or H₂SO₄, is added (step (2)) to create a pH adjusted waste ash slurry 30 having a pH lying within the range of pH4-11. This step will suitably remove excess lime contained in the waste ash. Soluble salts from the waste ash will also suitably be dissolved in the water of the slurry.

The pH adjusted waste ash slurry 30 is then treated with treatment chemicals, such as sulphides and/or polysulphides (step (2A)) to form a treated waste ash slurry 50. This step will suitably cause toxic metal salts such as lead to be presented as insoluble sulphides.

Following this the waste ash slurry is transferred to a dewatering station 60 and subjected to a dewatering step (step (3)). This produces an ash product (filter cake) 70 comprising a substantially solid phase and a water product 80 comprising a liquid phase comprising water and soluble salts.

If the ash product 70 is high in constituents such as sulphides suitable for cement manufacture then it may comprise a recyclable cake 90 and may be used as a raw material 100 for the cement industry. If the ash product 70 is not suitable for cement manufacture then it may comprise a non-recyclable cake 110. In this case it may be disposed of by landfill, either as hazardous waste 120 or non-hazardous waste 130 depending upon its composition.

The water product 80 may be disposed of by discharge to sewer or the environment 150. Alternatively, if it has appropriately low levels of soluble salts it may be recycled 140 and used as waste water 20 in a subsequent treatment process.

Suitable process conditions may be better understood with reference to the following example:

1 tonne of waste ash consisting of APC residue was treated. The APC residue was produced by incinerating municipal waste and performing a gas cleaning process on combustion gases. This APC residue comprised around 30% calcium hydroxide with around 20% free lime. The waste ash was analysed and found to include, among others, the constituents identified in Table 1.

| Table 1 | |
|---|---|
| Constituent | Amount |
| Al₂O₃ | 2.39% dry solids |
| CaO | 34.01% dry solids |
| Fe₂O₃ | 0.76% dry solids |
| SiO₂ | 4.68% dry solids |
| K₂O | 3.24% dry solids |
| MgO | 0.54% dry solids |
| MnO | 0.05% dry solids |
| Na₂O | 2.23% dry solids |
| SrO | 0.04% dry solids |
| TiO₂ | 0.78% dry solids |
| Na₂O + 0.67K₂O | 4.40% dry solids |
| Chloride (2:1 water soluble) | 67500mg/kg |
| *Although the ash comprised 34.01% dry solids CaO it was determined to comprise 21.49% free lime. | |

The waste ash was combined with 2 tonnes of water and mixed in a combining (mixing) vessel for around 10 minutes at ambient temperature to produce a waste ash slurry. The slurry was then treated with 100kg of 30% hydrochloric acid and mixed to adjust the pH to pH10. Following this 10kg of sodium sulphide was added to the slurry to precipitate metals as sulphides.

The pH adjusted and treated slurry was then transferred to a frame filter press and dewatered to produce a solid phase (ash product) having a water content of around 40% by weight and a liquid phase (water product).

The ash product was determined to comply with the requirements for non-hazardous landfill and the water product to be suitable for discharge to a sewer. The ash product was analysed and found to have a 64.90% air dried solids content and to include, among others, the constituents identified in Table 2.

| Table 2 | |
|---|---|
| Constituent | Amount |
| Al₂O₃ | 5.66% dry solids |
| CaO | 40.68% dry solids |
| Fe_{2O3} | 1.44% dry solids |
| SiO₂ | 10.57% dry solids |
| Chloride (2:1 water soluble) | 7980mg/kg |
| *Although the ash product comprised 40.68% dry solids CaO it was determined to comprise 15.56% free lime. | |

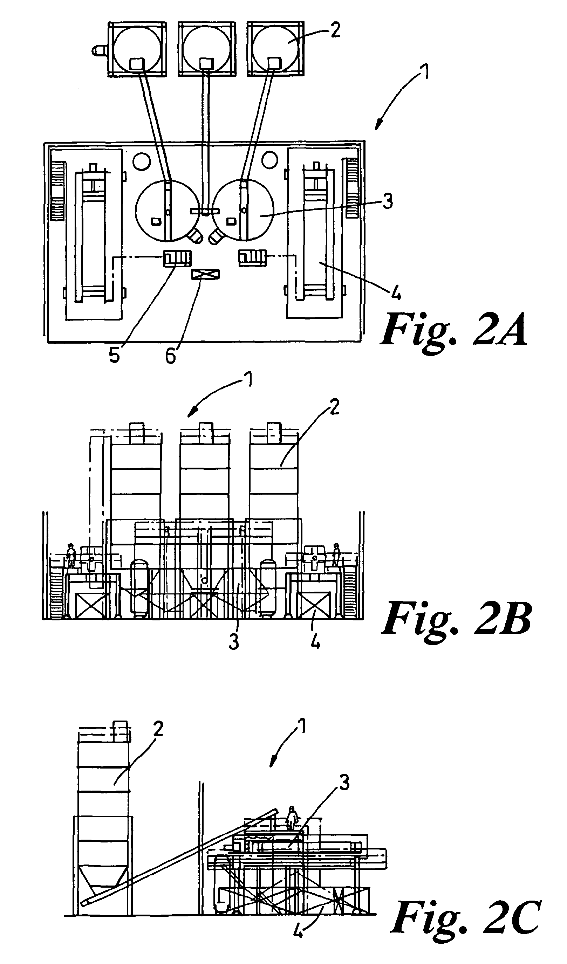

Figures 2A-2C illustrates a typical plant (apparatus) design for use in a waste ash treatment process.

The plant (apparatus) 1 comprises silos 2 for waste ash which are in communication with mixing tanks (combining vessels) 3. The apparatus also includes means to introduce water, acid and treatment chemicals to the mixing tanks 3. The mixing tanks 3 are in communication with filter presses 4. In use, the waste ash and water are combined in the mixing tanks 3 to produce a waste ash slurry. This is then mixed with acid and treatment chemicals before being pumped by feed pumps 5 to the filter presses 4 for dewatering to produce an ash product as a filter cake and a water product. The mixing and pumping operations are controlled by a motor control centre 6.

According to one embodiment of a treatment process a plant will process water or waste water to slurry waste ash (this is a step that is not being performed currently and is designed to dissolve soluble chloride and carbonate salts). The ratio of water to ash will be in the order of 70% water (or greater if required) to 30% ash. This slurry will then be pH adjusted using hydrochloric acid to remove excess lime from a gas cleaning process. The slurry will then be dosed with treatment chemicals to ensure that toxic metal salts are presented as insoluble hydroxides or sulphides.

The resultant treated slurry will then be passed through a plate and frame filter press to separate the insoluble salts and inert compounds from the soluble salts and water.

The resultant cake (ash product) of approximately 50% moisture content can then be classified as non-hazardous. This filter cake will then be transported to a local non-hazardous landfill for disposal.

The resultant brine solution (water product) will be discharged to foul sewer under a trade effluent discharge consent or taken by road tanker to a sewage works.

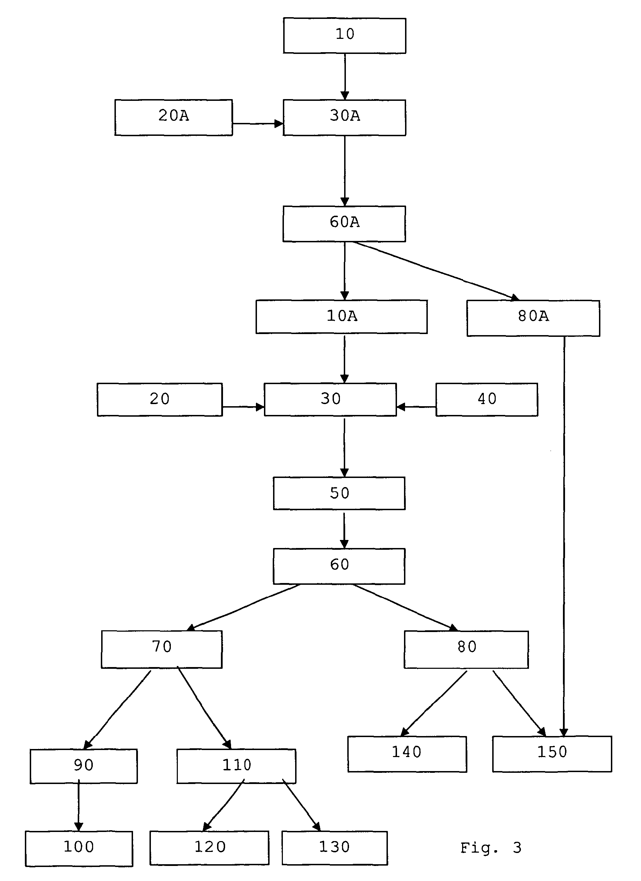

In an alternative embodiment a waste ash treatment process includes a further washing stage as illustrated by Figure 3.

The process is substantially the same as that of the embodiment of Figure 1 and like stages are labelled accordingly.

According to the process waste ash 10 is produced by the incineration of municipal waste (comprising one or more of domestic, trade and clinical waste). The waste ash 10 is combined with water (or waste water) 20A in a combining vessel (step (1A(i))) in a ratio of water:ash of at least 2:1, with 5:1 or greater being preferred, to form a waste ash slurry 30A. The waste ash slurry 30A is then transferred to a dewatering station 60A and dewatered (step (1A(ii))). This produces a dewatered wast ash slurry 10A. Soluble salts present in the waste ash may be removed from the waste ash slurry with the water component 80A produced in this step.

The dewatered waste ash slurry 10A is then combined with water (or waste water 20) in a combining vessel (step (1)). The water and ash combination is mixed and acid or waste acid 40, either HCl or H₂SO₄, is added (step (2)) to create a pH adjusted waste ash slurry 30 having a pH lying within the range of pH4-11.

The following process steps are then the same as those of the embodiment of Figure 1.

The pH adjusted waste ash slurry 30 is treated (step (2A)) to form a treated waste ash slurry 50. Following this the waste ash slurry is transferred to a dewatering station 60 and subjected to a dewatering step (step (3)). This produces an ash product (filter cake) 70 and a water product 80.

The ash product 70 may comprise a recyclable cake 90 and may be used as a raw material 100 for the cement industry. Alternatively, the ash product 70 may not be suitable for cement manufacture and may comprise a non-recyclable cake 110. In this case it may be disposed of by landfill, either as hazardous waste 120 or non-hazardous waste 130.

The water component 80A and water product 80 may be disposed of by discharge to sewer or the environment 150. To allow this the water component 80A may first have to be subjected to further processing, for example mixed with other effluent streams. Alternatively, if the water product has appropriate levels of soluble salts it may be recycled 140 and used as waste water 20 and/or 20A in a subsequent treatment process.

Suitable process conditions may be better understood with reference to the following example:

1 tonne of waste ash consisting of APC residue was treated. The APC residue was produced by incinerating municipal waste and performing a gas cleaning process on combustion gases. This APC residue comprised 30% calcium hydroxide, with around 20% free lime. The APC residue was as per that detailed in table 1 above.

The waste ash was combined with 5 tonnes of water and mixed in a combining (mixing) vessel for around 10 minutes at ambient temperature to produce a waste ash slurry.

The slurry was then transferred to a dewatering station and dewatered to produce a dewatered waste ash slurry having a water content of less than 60% by weight and a water component comprising approximately 80% of the soluble salts formerly present in the waste ash slurry. Following further processing the water component was suitable for discharge to a sewer.

The dewatered waste ash slurry was then transferred to a combining vessel and combined with 2 tonnes of water and mixed in a combining (mixing) vessel for around 10 minutes at ambient temperature to produce a waste ash slurry having a water content in excess of 60% by weight.

The slurry was then treated with 1 tonne of 20% sulphuric acid and mixed to adjust the pH to pH6. Following this 10kg of sodium sulphide was added to the slurry to precipitate metals as sulphides.

The pH adjusted and treated slurry was then transferred to a frame filter press and dewatered to produce a solid phase (ash product) having a water content of around 40% by weight and a liquid phase (water product).

The ash product was used as raw material as a gypsum replacement in cement production and the water product to be suitable for discharge to a sewer. The ash product was analysed and found to have a 63.50% air dried solids content and to include, among others, the constituents identified in Table 3.

| Table 3 | |
|---|---|
| Constituent | Amount |
| Al₂O₃ | 4.34% dry solids |
| CaO | 43.56% dry solids |
| Fe₂O₃ | 1.43% dry solids |
| SiO₂ | 7.80% dry solids |
| Chloride (2:1 water soluble) | 6750mg/kg |
| *Although the ash product comprised 43.56% dry solids CaO it was determined to comprise 8.52% free lime. | |

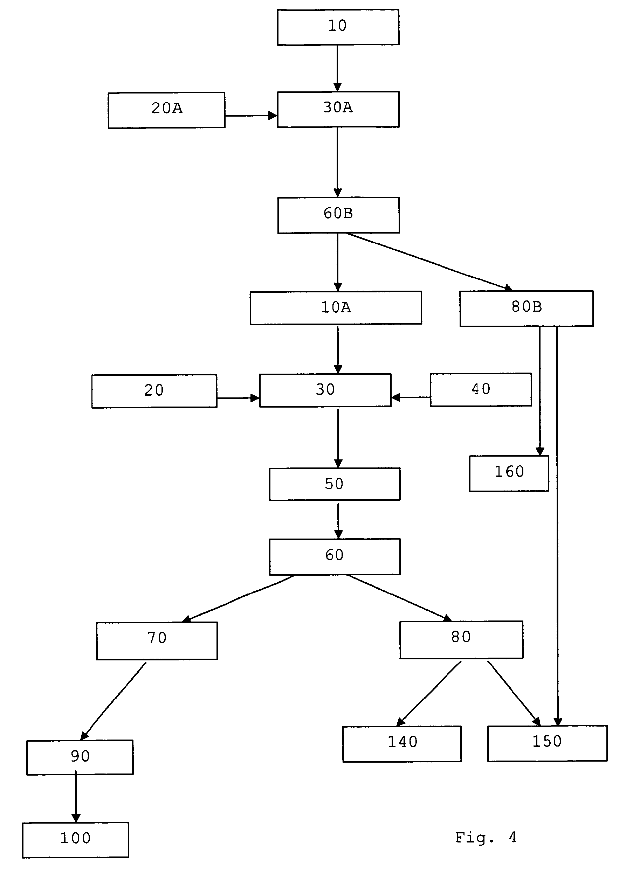

In an alternative embodiment a waste ash treatment process includes the step of separating a carbon component comprising activated carbon from the waste ash as illustrated by Figure 4.

The process is substantially the same as that of the embodiment of Figure 3 and like stages are labelled accordingly.

According to the process waste ash 10 is produced by the incineration of municipal waste (comprising one or more of domestic, trade and clinical waste) with the combustion gases being combined with hydrated lime and powder activated carbon. The waste ash 10 is combined with water (or waste water) 20A in a combining vessel (step (1A(i))) in a ratio of water:ash of at least 2:1, with 5:1 or greater being preferred, to form a waste ash slurry 30A. The waste ash slurry 30A is then transferred to a dewatering station 60B and a carbon component is removed as the slurry is dewatered (step (1A(ii)) and step (1B).

The dewatering operation of step 60B is performed in a centrifuge with the flow into the centrifuge and the flow of centrate out of the centrifuge being optimised such that the carbon particles (which form a lighter component of the slurry) are carried out as suspended solids in the centrate (water component 80B). The heavier inorganic portion comprising substantially all of the hydrated lime concentrates in the solid phase of the centrifuge and be eliminated as the solids (dewatered waste ash slurry 10A). Soluble salts present in the waste ash, as well as the carbon component and organic materials such as dioxins and furans which associate with the carbon, may be removed from the waste ash slurry with the water componen 80B produced in this step.

The dewatered waste ash slurry 10A is then combined with water (or waste water 20) in a combining vessel (step (1)). The water and ash combination is mixed and acid or waste acid 40, either HCl or H₂SO₄, is added (step (2)) in a neutralisation stage to create a pH adjusted waste ash slurry 30 having a pH lying within the range of pH4-11.

The following process steps are then the same as those of the embodiment of Figure 3.

The pH adjusted waste ash slurry 30 is treated (step 2A)) to form a treated waste ash slurry 50. Following this the waste ash slurry is transferred to a dewatering station 60 and subjected to a dewatering step (step (3)). This produces an ash product (filter cake) 70 and a water product 80.

The ash product 70 may comprise a recyclable cake 90 and may be used as a raw material 100 for the cement industry, suitably as a setting retardant for use in cement manufacture. The ash product 70 may suitably comprise synthetic gypsum low in dioxins and/or furans which is particularly suitable for cement manufacture.

The water component SOB is subjected to processing to separate out dioxins from the water as a solid phase 160 for safe disposal and the remainder of the water component 80B as well as the water product 80 may be disposed of by discharge to sewer or the environment 150. To allow this the water component 80B may first have to be subjected to further processing, for example mixed with other effluent streams. Alternatively, if the water product has appropriate levels of soluble salts it may be recycled 140 and used as waste water 20 and/or 20A in a subsequent treatment process.

It will be appreciated that preferred embodiments of the present invention may be viable and may meet the requirements of Waste Acceptance Criteria (WAC), licence conditions for non-hazardous landfill and the parameters of a regular sewer discharge consent.

Preferred embodiments of the present invention may reduce the mass of waste for landfill by more than 50% and in most cases the treated mass may be suitable for non-hazardous landfill as opposed to hazardous landfill. Preferred embodiments of the present invention may achieve this by dissolving soluble calcium chloride and carbonate salts in the water and by ensuring that sulphates and metal salts which are unsuitable for discharge to sewer remain insoluble.

Preferred embodiments of the present invention may remove leachable components from waste ash in order that APC residue treated material meets Waste Acceptance criteria (WAC) (and may therefore be suitable for hazardous landfill) and in some cases depending on the levels of other constituents such as metals may render the treated APC mass suitable for non-hazardous landfill.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of treating waste ash, the method comprising the steps of:
(1) combining waste ash with water to form a waste ash slurry comprising water in an amount of at least 50% by weight;
(2) treating the waste ash slurry and/or the waste ash and/or water to be combined with the waste ash to lower the pH thereof; and
(3) dewatering the waste ash slurry such that the resultant ash product comprises water in a lower amount than said waste ash slurry.

2. A method according to Claim 1, wherein step (2) comprises the step of lowering the pH of the waste ash slurry.

3. A method according to Claim 1 or 2, wherein the method further comprises the step (2A) of adding treatment chemicals to the waste ash slurry and/or to the waste ash and/or to the water to be combined therewith to convert one or more toxic metals, or salts thereof, present in the waste ash to a water insoluble salt.

4. A method according to Claim 3, wherein step (2A) comprises adding a treatment agent to precipitate one or more metals and wherein the treatment agent comprises a sulphide and/or polysulphide.

5. A method according to any preceding claim, wherein the method comprises the further step (1A) of washing waste ash, wherein step (1A) comprises the step (i) of combining waste ash with water to form a waste ash slurry and the step (ii) of dewatering the waste ash slurry of step (i) to produce a waste ash slurry of lower water content.

6. A method according to Claim 5 when dependent on Claim 3 or 4, wherein step ((1A(i)) and step (1A(ii)) are performed prior to step (1) and wherein step (2A) is performed after step (2).

7. A method according to any preceding claim, wherein the waste ash comprises activated carbon and the method comprises the step (1B) of separating carbon component from the waste ash.

8. A method according to Claim 7 when dependent on Claim 5 or 6, wherein step (1B) and step (1A(ii)) are one and the same.

9. A method according to any preceding claim, wherein the method comprises forming a waste ash slurry such that dioxins and or/or furans concentrate in the carbon component of the slurry and wherein carbon component is removed by centrifugation.

10. A method according to any preceding claim, wherein step (2) comprises adding acid such that the pH of the waste ash slurry is caused to lie in the range of pH4-12.

11. A method according to any preceding claim, wherein the ash product of step (3) comprises water in an amount of no more than 70% by weight.

12. A method according to any preceding claim, wherein the ash product comprises synthetic gypsum for cement manufacture.

13. An apparatus for use in the method according to an of Claims 1 to 12, said apparatus comprising: a waste ash silo; a water supply; a combining vessel; and a dewatering station.

14. A method of manufacturing cement, the method comprising:
(a) incinerating waste and combining the combustion gases with activated carbon and hydrated lime to produce waste ash;
(b) treating the waste ash according to the method of any of claims 1 to 22; and
(c) using the ash product from step (b) as synthetic gypsum in the manufacture of cement.

15. A cement material comprising an ash product produced by the method of any of Claims 1 to 12.
